# EUROPÄISCHE PATENTSCHRIFT

(11) **EP 2 234 787 B1**
(45) Veröffentlichungstag und Bekanntmachung des Hinweises auf die Patenterteilung: **09.04.2014**
(21) Anmeldenummer: 08870793.0
(22) Anmeldetag: 20.11.2008
(51) Int. Cl.: B29C 49/42, B29C 49/64, B65G 47/84, B29C 33/26, B29C 49/06, B29C 49/36

(54) **VERFAHREN UND VORRICHTUNG ZUR BLASFORMUNG VON BEHÄLTERN UNTER VERWENDUNG EINER HÖHENEINSTELLBAREN TRANSPORTVORRICHTUNG**
METHOD AND DEVICE FOR BLOW-MOLDING CONTAINERS USING A HEIGHT-ADJUSTABLE TRANSPORT DEVICE
PROCÉDÉ ET DISPOSITIF POUR LE MOULAGE PAR EXTRUSION-SOUFFLAGE DE RÉCIPIENTS UTILISANT D'UN ÉLÉMENT SUPPORT RÉGLABLE EN HAUTEUR

(30) Priorität: 15.01.2008 DE 102008005137
(43) Veröffentlichungstag der Anmeldung: 06.10.2010
(73) Patentinhaber: KHS Corpoplast GmbH, 22145 Hamburg (DE)
(72) Erfinder: LITZENBERG, Michael, 21502 Geesthacht (DE); LINKE, Michael, 22047 Hamburg (DE); BAUMGARTE, Rolf, 22926 Ahrensburg (DE); LEWIN, Frank, 22889 Tangstedt (DE)
(74) Vertreter: Hausfeld, Norbert
(86) Internationale Anmeldenummer: PCT/DE2008/001949
(87) Internationale Veröffentlichungsnummer: WO 2009/089811

(56) Entgegenhaltungen:
- EP-A- 0 950 606
- WO-A-97/03805
- WO-A-2007/065392
- GB-A- 958 985
- US-A- 5 688 466

## Beschreibung

Die Erfindung betrifft ein Verfahren zur Blasformung von Behältern, bei dem vorformlinge aus einem thermoplastischen Material im Bereich einer Heizstrecke erwärmt und anschließend an eine Blaseinrichtung übergeben werden, in der die Vorformlinge durch Einwirkung eines Blasdruckes innerhalb von Blasformen zu den Behältern umgeformt werden und bei dem die Vorformlinge mindestens entlang eines Teils ihres Transportweges von einem Tragelement gehalten werden.

Die Erfindung betrifft darüber hinaus eine Vorrichtung zur Blasformung von Behältern, die eine Heizstrecke zur Erwärmung von Vorformlingen aus einem thermoplastischen Material aufweist und die mit einer Blaseinrichtung versehen ist, die mindestens eine Blasstation zur Umformung der Vorformlinge in die Behälter aufweist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformlinge durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bekannt ist die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Klemmdornen, die zur Halterung in einen Mündungsbereich des Vorformlings einführbar sind, gehören ebenfalls zu den verfügbaren Konstruktionen.

Eine Handhabung von Behältern und Vorformlingen unter Verwendung von Übergaberädern wird beispielsweise in der DE-OS 199 06 438 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der vorformlinge erfolgt zum einen bei den sogenannten zweistufenverfahren, bei denen die vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei den als Transportdorn ausgebildeten Transportelementen für die Vorformlinge oder die geblasenen Behälter, die in einen Mündungsbereich eingeführt werden oder die den Mündungsbereich ganz oder teilweise umschließen, besteht das Problem, daß eine Handhabung von vorformlingen mit unterschiedlich langen Mündungsbereichen unterstützt werden soll. Insbesondere besteht häufig die Anforderung, entlang des Transportweges der Vorformlinge und der Flaschen ein gleiches Höhenniveau eines außenseitig unterhalb des Mündungsbereiches angeordneten Stützringes auch dann zu gewährleisten, wenn Vorformlinge bzw. Flaschen zu verarbeiten sind, bei denen die Vorformlinge und Flaschen zwischen dem Stützring und einem oberen Rand des Mündungsbereiches unterschiedliche Längenausdehnungen besitzen.

Bei einem Produktwechsel der zu verarbeitenden Vorformlinge ist es deshalb in der Regel erforderlich, bei unterschiedlichen zu berücksichtigenden Längen der Mündungsbereiche Distanzelemente als Anschlag auf die Transportelemente aufzusetzen. Die Anschlagelemente gewährleisten, daß die Vorformlinge bzw. die Flaschen soweit auf die Transportelemente aufgeschoben werden, bis ein definiertes Höhenniveau der Stützringe erreicht wird. Die Montage und Demontage derartiger Distanzelemente bzw. Anschläge erfolgt manuell und ist damit zeit- sowie arbeitsaufwendig.

Bekannt ist es aus der WO 2007/065392 ebenfalls bereits, eine automatische Verstelleinrichtung zu verwenden, die im Bereich jedes der Transportelemente angeordnete Anschlagelemente vorgebbar zwischen mindestens zwei unterschiedlichen Positionierungen verstellt. Eine derartige automatische Verstelleinrichtung erhöht zwar erheblich den Benutzungskomfort, durch die Vielzahl der verwendeten Transportelemente und die Vielzahl der hierdurch erforderlichen verstellbaren Anschlagelemente wird jedoch ein erheblicher Aufwand verursacht. Die Vielzahl der verstellbaren Anschlagelemente führt darüber hinaus zu einer erhöhten Störungswahrscheinlichkeit.

In der WO 97/03805 A wird eine Blasmaschine beschrieben, bei der die Vorformlinge von Paletten getragen durch die Blasmaschine transportiert werden. Auf jeder Palette sind zwei Vorformlinge angeordnet. Die Paletten können sowohl reihenartig als auch hintereinander transportiert werden.

In der US 5,688,466 A wird eine Heizeinrichtung für eine Blasmaschine beschrieben, bei der einzelne Heizstrahler hinsichtlich ihres Abstandes relativ zu den zu beheizenden Vorformlingen verstellt werden können.

Aufgabe der vorliegenden Erfindung ist es, ein Verfahren der einleitend genannten Art derart zu verbessern, daß ein Produktwechsel unterstützt wird.

Diese Aufgabe wird erfindungsgemäß dadurch gelöst, daß die Tragelemente im Bereich der Heizstrecke gemeinsam mit einer die Tragelemente umlaufend transportierenden Transporteinrichtung relativ zu einer Aufstellfläche der Heizstrecke höhenjustiert werden.

Weitere Aufgabe der vorliegenden Erfindung ist es, eine Vorrichtung der einleitend genannten Art derart zu konstruieren, daß ein Produktwechsel erleichtert wird.

Diese Aufgabe wird erfindungsgemäß dadurch gelöst, daß Tragelemente zum Transport der Vorformlinge im Bereich der Heizstrecke von einer umlaufend angetriebenen Transporteinrichtung gehaltert und gemeinsam mit der Transporteinrichtung relativ zu einer Aufstellfläche der Heizstrecke höhenjustierbar angeordnet sind.

Durch die gemeinsame Höhenjustierung der Tragelemente und der Transporteinrichtung relativ zur Aufstellfläche der Heizstrecke kann der Justiervorgang zur Bereitstellung der aktuell benötigten Montagehöhe sehr einfach und mit geringem Zeitaufwand durchgeführt werden. In Abhängigkeit von einer konkreten Längendimensionierung des Mündungsabschnittes der jeweiligen Vorformlinge erfolgt die Höhenjustierung derart, daß unabhängig von der konkreten Dimensionierung des Mündungsabschnittes die Stützringe der Vorformlinge auf einem im wesentlichen gleichen Höhenniveau transportiert werden. Mechanisch aufwendige und gegebenenfalls störungsanfällige separate Höhenjustierungen der einzelnen Transportelemente werden durch die gemeinsame verstellbarkeit der Tragelemente und der Transporteinrichtung relativ zur Aufstellfläche der Heizstrecke vermieden.

Eine vergleichsweise geringe zu positionierende Masse wird dadurch erreicht, daß die Transporteinrichtung relativ zu einem Gestell der Heizstrecke höhenjustiert wird.

Eine vereinfachte Höhenpositionierbarkeit kann dadurch hervorgerufen werden, daß die Transporteinrichtung gemeinsam mit einem Gestell der Heizstrecke relativ zur Aufstellfläche höhenjustiert wird.

Zur Unterstützung einer einfachen Höhenjustierbarkeit wird vorgeschlagen, daß ein Höhenniveau einer Einleitung der Vorformlinge in den Bereich der Heizstrecke außerhalb der Heizstrecke vorgegeben wird.

Darüber hinaus ist auch daran gedacht, daß ein Ausgabenniveau der Vorformlinge aus der Heizstrecke heraus außerhalb der Heizstrecke festgelegt wird.

Eine kompakte Anordnung wird dadurch unterstützt, daß ein Ausgabeniveau der vorformlinge von einer Übergabeeinrichtung an der Blaseinrichtung vorgegeben wird.

Übergabevorgänge mit hoher Übergabegeschwindigkeit und exakte reproduzierbare Bewegungsabläufe können dadurch bereitgestellt werden, daß das Ausgabeniveau von an einem Übergaberad der Blaseinrichtung angeordneten Tragelementen vorgegeben wird.

Ungewollte Veränderungen eines in einer Längsrichtung der Vorformlinge generierten Temperaturprofils werden dadurch vermieden, daß eine Höhenjustierung der Transporteinrichtung gemeinsam mit im Bereich der Heizstrecke angeordneten Heizstrahlern durchgeführt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen Längsschnitt durch einen von einem Transportelement gehaltenen Vorformling und
- Fig. 6: eine schematische Darstellung eines Längsschnittes durch eine Heizstrecke für die Vorformlinge mit einer Höhenjustierbarkeit für die von einer Transporteinrichtung gehaltenen Tragelemente mit zwei dargestellten unterschiedlichen Höhenjustierungen.

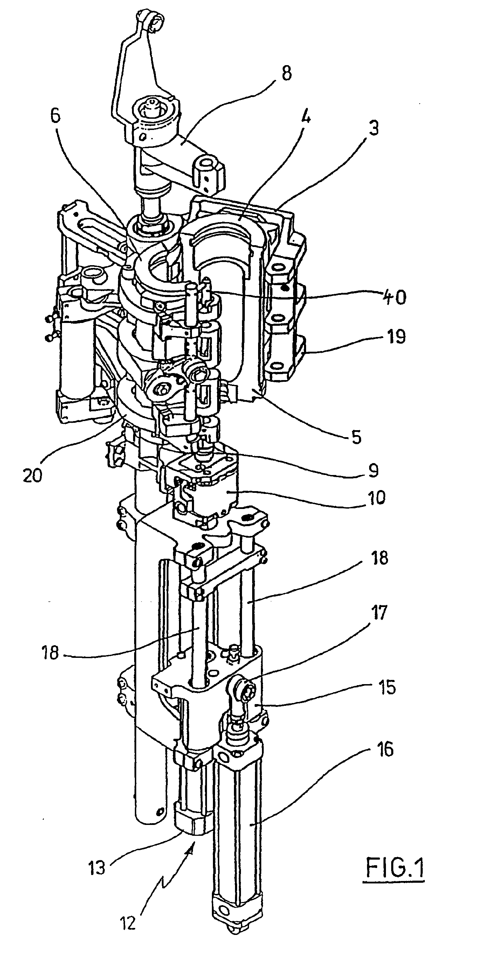

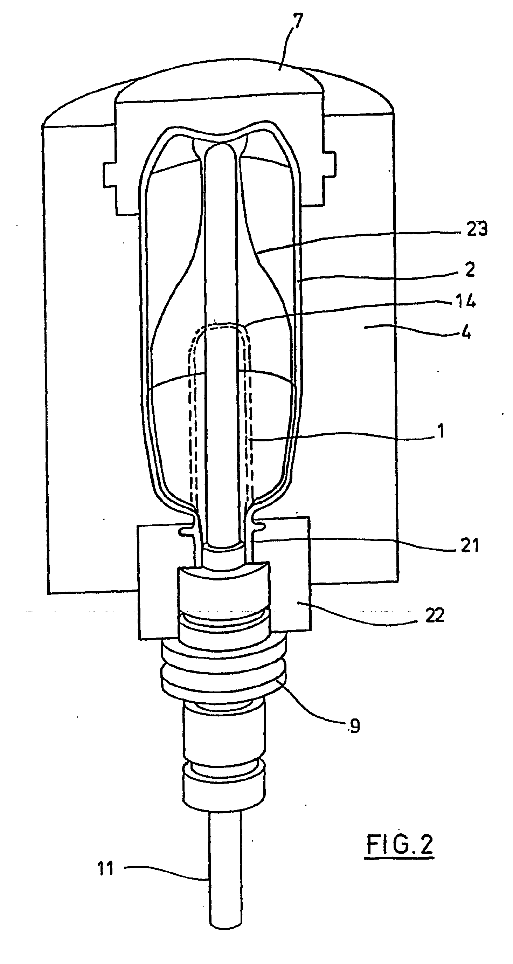

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Halteelement (9) fixiert sein. Es ist beispielsweise möglich, den Vorformling (1) über Zangen oder andere Handhabungsmittel direkt in die Blasform (4) einzusetzen.

Zur Ermöglichung einer Druckluftzuleitung ist unterhalb der Blasform (4) ein Anschlußkolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad (25) angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

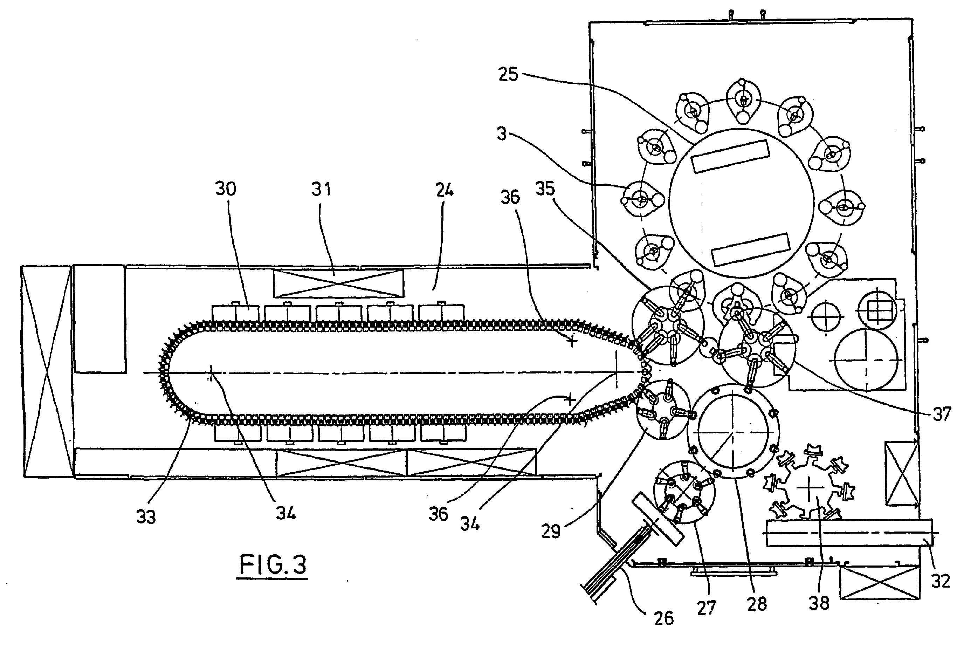

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die vorformlinge (1) zu temperieren. Nach einer ausreichenden Temperierung der Vorformlinge (1) werden diese von einem Eingaberad (35) an das Blasrad (25) übergeben, in dessen Bereich die Blasstationen (3) angeordnet sind. Die fertig geblasenen Behälter (2) werden von einem Entnahmerad (37) und einem Ausgaberad (38) einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (27) und zum Blasrad (25). Alternativ zur Verwendung von kettenartigen Transportelementen (33) ist es beispielsweise auch möglich, ein rotierendes Heizrad zu verwenden.

Nach einem fertigen Blasen der Behälter (2) werden diese vom Entnahmerad (37) aus dem Bereich der Blasstationen (3) herausgeführt und anschließend zur Ausgabestrecke (32) transportiert.

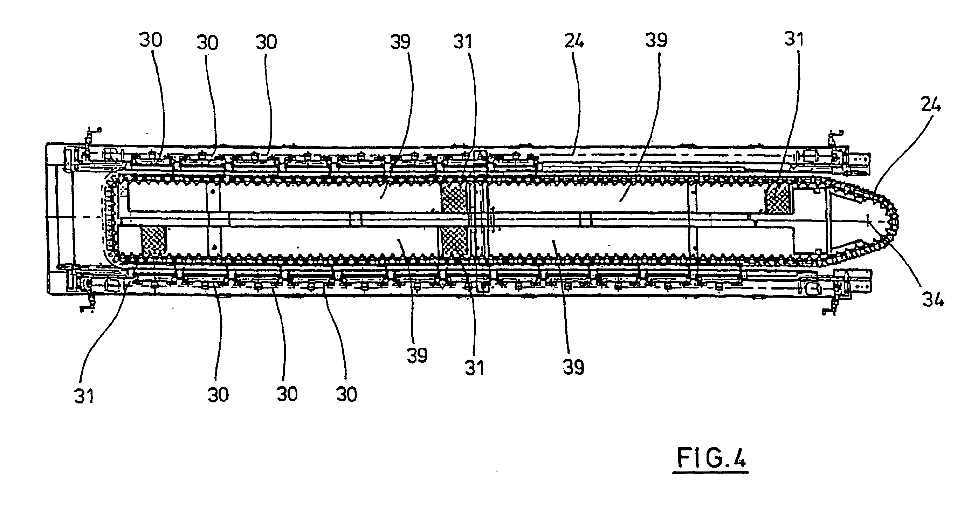

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine kann in unterschiedlicher Art und weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling den gesamten Bereich der Blasmaschine ohne Durchführung von Wendevorgängen mit seiner Mündung in lotrechter Richtung nach oben orientiert.

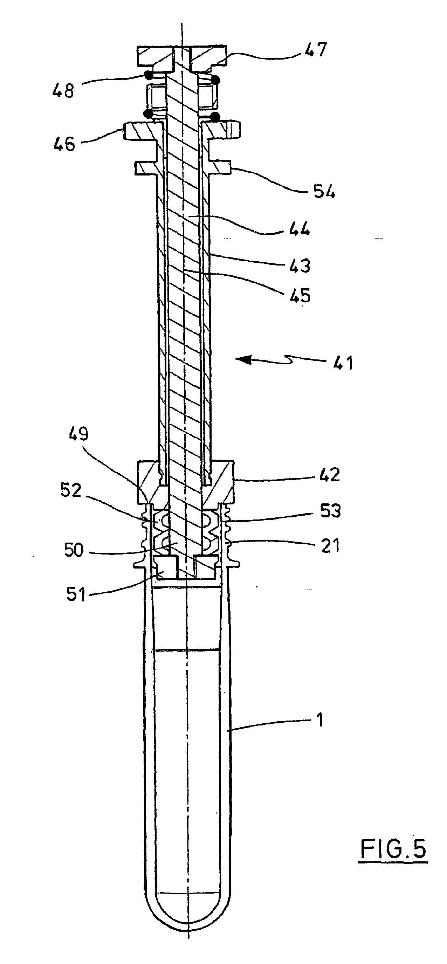

Ein Transport der vorformlinge (1) bzw. der geblasenen Behälter (2) durch die Blasmaschine hindurch erfolgt mindestens streckenweise unter Verwendung von Tragelementen (41). Ein Ausführungsbeispiel der Tragelemente (41) ist in Fig. 5 dargestellt. Die Tragelemente (41) können als sogenannte Transportdorne ausgebildet sein, auf die die Vorformlinge (1) aufgesteckt werden. Bei einem Aufstecken erfolgt ein Transport der Vorformlinge (1) bzw. der Behälter (2) mit den jeweiligen Mündungsabschnitten (21) in lotrechter Richtung nach unten. Die Tragelemente (41) können aber beispielsweise auch als Klemmdorne oder Spreizdorne ausgebildet sein, die in lotrechter Richtung von oben in die Vorformlinge (1) bzw. die Behälter (2) eingeführt werden und den Mündungsabschnitt (21) von innen und/oder von außen beaufschlagen. Eine derartige Handhabung erweist sich insbesondere bei einem Transport der Vorformlinge (1) bzw. der Behälter (2) mit in lotrechter Richtung nach oben orientierten-Mündungsabschnitten (21) als vorteilhaft.

Unter Verwendung der Tragelemente (41) können die Vorformlinge (1) bzw. die Behälter (2) durch den gesamten Bereich der Blasmaschine transportiert werden. Ebenfalls ist daran gedacht, die Tragelemente (41) lediglich im Bereich der Heizstrecke (24) einzusetzen und einen Transport der Vorformlinge (1) bzw. der Behälter (2) entlang des weiteren Transportweges unter Verwendung von Haltezangen durchzuführen.

Fig. 5 zeigt einen Längsschnitt durch einen vorformling (1), in dessen Mündungsabschnitt (21) bereichsweise ein Tragelement (41) eingeführt ist. Das Tragelement (41) weist im Bereich seines dem Vorformling (1) zugewandten Endes ein Andruckelement (42) auf, das an einem hülsenförmigen Basiselement (43) befestigt ist. Innerhalb des Basiselementes (43) ist ein Positionierelement (44) geführt, das in Richtung einer Längsachse (45) relativ zum Basiselement (43) beweglich ist. Im Bereich seiner dem Vorformling (1) abgewandten Ausdehnung haltert das Basiselement (43) ein Abschlußelement (46), das beim Ausführungsbeispiel gemäß Fig. 5 als ein Zahnrad ausgebildet ist. Gegenüber dem Abschlußelement (46) stützt sich ein Begrenzungselement (47) des Positionierelementes (44) über eine Feder (48) ab. Die Feder (48) ist als eine zugfeder ausgebildet und ermöglicht eine verschiebung des Positionierelementes (44) innerhalb des Basiselementes (43) in Richtung auf den Vorformling (1). Nach einer Beendigung einer ziehenden Kraftbeaufschlagung des Positionierelementes (44) wird dieses von der Feder (48) in eine Grundpositionierung zurückgeführt.

In Fig. 5 ist insbesondere zu erkennen, daß der Mündungsabschnitt (21) mit einer oberen Begrenzung (49) gegen das Andrückelement (42) geführt ist. Das Positionierelement (44) greift mit einem Kopf (50) in den Mündungsabschnitt (21) ein. Der Kopf (50) besteht im wesentlichen aus einem Spannelement (51) sowie einem zwischen dem Spannelement (51) und dem Andrückelement (42) angeordneten Klemmelement (52). Das Klemmelement (52) kann aus einem elastomeren Material ausgebildet sein.

Bei der in Fig. 5 dargestellten Einführpositionierung ist die Feder (48) weitgehend entspannt und zwischen dem Klemmelement (52) und einer inneren Begrenzung des Mündungsabschnittes (21) erstreckt sich ein Spalt (53). Das Positionierelement (44) ist in diesem Zustand reibungsfrei bzw. zumindest reibungsarm in den Mündungsabschnitt (21) einführbar. Zur Durchführung einer Verspannung des Klemmelementes (52) relativ zum Vorformling (1) wird das Positionierelement (44) ein Stück aus dem Basiselement (43) in eine dem Vorformling (1) abgewandte Richtung herausgezogen. Das Klemmelement (52) wird hierdurch zwischen dem Andrückelement (42) und dem Spannelement (51) verformt und in Richtung auf die Innenwand des Vorformlings (1) nach außen gedrückt. Hierdurch erfolgt ein Spreizen des Klemmelementes (52) und eine entsprechende Fixierung des Vorformlings (1).

Beim dargestellten Ausführungsbeispiel ist das Klemmelement (52) im wesentlichen rotationssymmetrisch zur Längsachse (45) ausgebildet und besteht aus zwei in Richtung der Längsachse (45) hintereinander angeordneten U-Profilen, wobei die jeweiligen U-Schenkel in Richtung auf das Positionierelement (44) angeordnet sind. Die beiden U-Schenkel können einteilig oder als separate Bauelemente ausgebildet sein. Alternativ zur Verwendung von U-Profilen oder andersartigen Profilen ist auch die Verwendung von Vollmaterial möglich. Im einfachsten Fall wird ein O-Ring verwendet. Das in Fig. 5 veranschaulichte Profil ermöglicht jedoch mit einer vergleichsweise geringen Stellkraft die Bereitstellung einer zuverlässigen Klemmung, wobei durch die Eigenelastizität des Klemmelementes (52) zu große Klemmkräfte vermieden werden.

Ein Transport des Tragelementes (41) entlang eines Teiles der Blasmaschine, insbesondere entlang der Heizstrecke (24), kann beispielsweise unter Verwendung von Führungsschienen erfolgen, die zwischen dem Abschlußelement (46) und einem Quersteg (54) eingreifen. Unter Verwendung des mit der Verzahnung versehenen Abschlußelementes (46) kann eine Rotationsbewegung des Tragelementes (41) um die Längsachse (45) herum hervorgerufen werden.

Zur Durchführung einer Positionierbewegung des Positionierelementes (44) relativ zum Basiselement (43) kann eine Kurvensteuerung verwendet werden. Die Kurvensteuerung kann dabei beispielsweise das Begrenzungselement (47) entgegen der Kraft der Feder (48) aus dem Basiselement (43) herausziehen, so daß das Tragelement (41) nach einer Freigabe durch die Kurvensteuerung wieder in die in Fig. 5 dargestellte Grundpositionierung zurückkehrt.

Gemäß einer weiteren Ausführungsform ist es auch möglich, die Feder (48) als eine Druckfeder auszubilden, die in einer Grundpositionierung das Klemmelement (52) zwischen dem Spannelement (51) und dem Andruckelement (42) verformt. Es würde somit im Grundzustand eine Halterung des vorformlings (1) erfolgen und nur bei einer aktiven Betätigung, beispielsweise durch eine Kurvensteuerung, erfolgt eine Freigabe des Vorformlings (1) durch eine Entspannung des Klemmelementes (52). Die konkrete technische Realisierung kann anwendungsabhängig vorgegeben werden. Die Verwendung der Druckfeder besitzt den Vorteil, daß der Vorformling bei einem Wegfall der externen Steuerkraft nicht verloren werden kann.

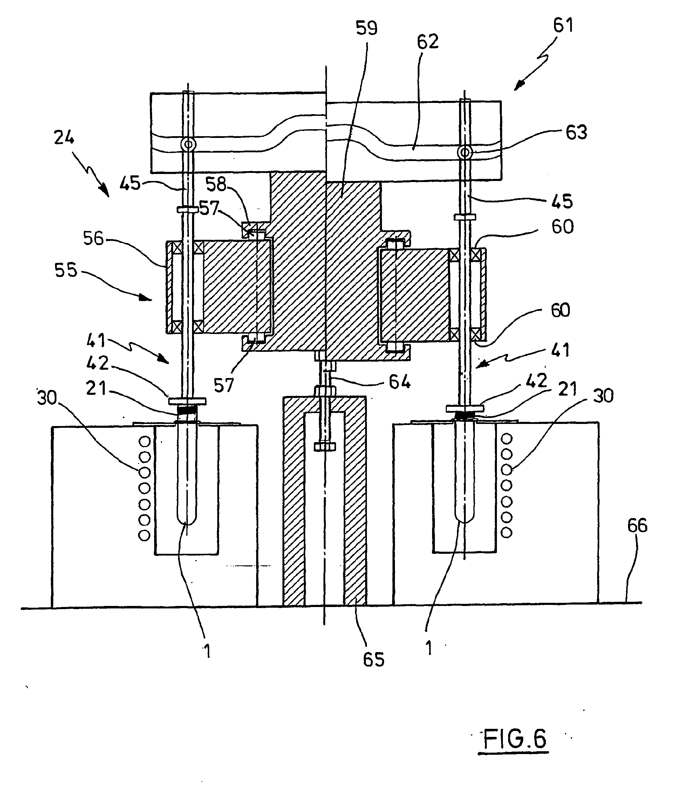

Fig. 6 zeigt einen Querschnitt durch eine Ausführungsform der Heizstrecke (24). Die Vorformlinge (1) werden hier von Tragelementen (41) gehalten an den Heizstrahlern (33) vorbeigeführt. Die Tragelemente (41) können insbesondere als im Bereich der Heizstrecke (44) umlaufende Transportelemente (33) ausgebildet sein.

Die Tragelemente (41) sind von einer umlaufend angetriebenen Transporteinrichtung (55) gehaltert. Die Transporteinrichtung kann beispielsweise aus einzelnen kettenartig miteinander verbundenen Transportgliedern (56) ausgebildet sein, die beispielsweise unter Verwendung von Rollen (57) beweglich in Führungsschienen (58) gehaltert sind. Die Führungsschiene (58) wird von einem Zentralelement (59) der Transporteinrichtung (55) gehaltert.

Die Tragelemente (41) sind beim dargestellten Ausführungsbeispiel von Lagern (60) geführt. Insbesondere ist daran gedacht, daß die Lager (60) sowohl eine Rotationsbewegung der Tragelemente (41) um die Längsachse (45) herum als auch eine Translationsbewegung der Tragelemente (41) in Richtung der Längsachse (45) zulassen. Eine Translationsbewegung der Tragelemente (41) kann durch eine Kurvensteuerung (61) vorgegeben werden, die eine Kurvenbahn (62) aufweist, in die die Tragelemente (41) mit Kurvenrollen (63) eingreifen.

Das Zentralelement (59) ist über eine Justiereinrichtung (64) höhenverstellbar relativ zu einem Tragsockel (65) gelagert, der auf einer Aufstellfläche (66) der Heizstrecke (24) aufliegt. Die Justiereinrichtung (64) kann beispielsweise als eine oder mehrere Verstellschrauben realisiert sein. Unter Verwendung der Justiereinrichtung (64) ist es möglich, die Transporteinrichtung (55) gemeinsam mit den Tragelementen (41) relativ zur Aufstellfläche (66) höhenpositionierbar anzuordnen.

Gemäß dem in Fig. 6 im linken Zeichnungsteil dargestellten Betriebszustand wird ein Vorformling (1) mit einem relativ langen Mündungsabschnitt (21) verwendet. Das Tragelement (41) ist mit seinem Andrückelement (42) gegen den Mündungsabschnitt (21) geführt.

Im rechten Zeichnungsteil von Fig. 6 ist eine Höhenjustierung der Transporteinrichtung (55) derart dargestellt, daß das Andrückelement (42) auch beim Vorformling (1) mit einem relativ zum linken Zeichnungsteil von Fig. 6 kürzeren Mündungsabschnitt (21) gegen den Rand des Mündungsabschnittes (21) geführt ist. Für einen kürzeren Mündungsabschnitt (21) wird die Transporteinrichtung (55) somit unter Verwendung der Justiereinrichtung (64) abgesenkt und für einen entsprechenden längeren Mündungsabschnitt (21) angehoben.

Gemäß einem anderen Ausführungsbeispiel ist es auch möglich, eine Höhenjustierung unterhalb des Tragsockels (65) anzuordnen und hierdurch die jeweilige Höhenvorgabe zu realisieren.

## Patentansprüche

1. Verfahren zur Blasformung von Behältern (2), bei dem Vorformlinge (1) aus einem thermoplastischen Material im Bereich einer Heizstrecke (24) erwärmt und anschließend an eine Blaseinrichtung übergeben werden, in der die Vorformlinge (1) durch Einwirkung eines Blasdruckes innerhalb von Blasformen (4) zu den Behältern (2) umgeformt werden, und bei dem die Vorformlinge (1) mindestens entlang eines Teiles ihres Transportweges von einem Tragelement (46) gehalten werden, **dadurch gekennzeichnet, daß** die Tragelemente (46) im Bereich der Heizstrecke (24) gemeinsam mit einer die Tragelemente (46) umlaufend transportierenden Transporteinrichtung (55) relativ zu einer Aufstellfläche (66) der Heizstrecke (24) höhenjustiert werden.

2. Verfahren nach Anspruch 1, **dadurch gekennzeichnet, daß** die Transporteinrichtung (55) relativ zu einem Gestell der Heizstrecke (24) höhenjustiert wird.

3. Verfahren nach Anspruch 1, **dadurch gekennzeichnet, daß** die Transporteinrichtung (55) gemeinsam mit einem Gestell der Heizstrecke (24) relativ zur Aufstellfläche (66) höhenjustiert wird.

4. Verfahren nach Anspruch 3, **dadurch gekennzeichnet, daß** ein Höhenniveau einer Einleitung der vorformlinge (1) in den Bereich der Heizstrecke (24) außerhalb der Heizstrecke (24) vorgegeben wird.

5. Verfahren nach Anspruch 3 oder 4, **dadurch gekennzeichnet, daß** ein Ausgabenniveau der Vorformlinge (1) aus der Heizstrecke (24) heraus außerhalb der Heizstrecke (24) festgelegt wird.

6. Verfahren nach Anspruch 5, **dadurch gekennzeichnet, daß** ein Ausgabeniveau der Vorformlinge (1) von einer Übergabeeinrichtung an der Blaseinrichtung vorgegeben wird.

7. Verfahren nach einem der Ansprüche 5 oder 6, **dadurch gekennzeichnet, daß** das Ausgabeniveau von an einem Übergaberad der Blaseinrichtung angeordneten Tragelementen vorgegeben wird.

8. Verfahren nach einem der Ansprüche 1 bis 7, **dadurch gekennzeichnet, daß** eine Höhenjustierung der Transporteinrichtung (55) gemeinsam mit im Bereich der Heizstrecke (24) angeordneten Heizstrahlern (30) durchgeführt wird.

9. Vorrichtung zur Blasformung von Behältern (2), die eine Heizstrecke (24) zur Erwärmung von Vorformlingen (1) aus einem thermoplastischen Material aufweist und die mit einer Blaseinrichtung versehen ist, die mindestens eine Blasstation (3) zur Umformung der Vorformlinge (1) in die Behälter (2) aufweist, **dadurch gekennzeichnet, daß** Tragelemente (41) zum Transport der Vorformlinge (1) im Bereich der Heizstrecke (24) von einer umlaufend angetriebenen Transporteinrichtung (55) gehaltert und gemeinsam mit der Transporteinrichtung (55) relativ zu einer Aufstellfläche (66) der Heizstrecke (24) höhenjustierbar angeordnet ist.

10. Vorrichtung nach Anspruch 9, **dadurch gekennzeichnet, daß** die Transporteinrichtung (55) relativ zu einem Gestell der Heizstrecke (55) höhenjustierbar angeordnet ist.

11. Vorrichtung nach Anspruch 9, **dadurch gekennzeichnet, daß** die Transporteinrichtung (55) gemeinsam mit einem Gestell der Heizstrecke (24) relativ zur Aufstellfläche (66) höhenjustierbar angeordnet ist.

12. Vorrichtung nach Anspruch 11, **dadurch gekennzeichnet, daß** ein Eingabeniveau der Vorformlinge (1) in die Heizstrecke (24) hinein separat von der Heizstrecke (24) durch eine Vorformlingszuführung vorgegeben ist.

13. Vorrichtung nach Anspruch 11, **dadurch gekennzeichnet, daß** ein Ausgabeniveau der Vorformlinge (1) aus der Heizstrecke (24) heraus von einem Bauelement außerhalb der Heizstrecke (24) vorgegeben ist.

14. Vorrichtung nach Anspruch 13, **dadurch gekennzeichnet, daß** das Ausgabeniveau der Vorformlinge durch ein Bauelement der Blaseinrichtung vorgegeben ist.

15. Vorrichtung nach einem der Ansprüche 11 bis 14, **dadurch gekennzeichnet, daß** das Ausgabeniveau der vorformlinge von an einem Übergaberad der Blaseinrichtung angeordneten Tragelementen vorgegeben ist.

16. Vorrichtung nach einem der Ansprüche 9 bis 15, **dadurch gekennzeichnet, daß** die Transporteinrichtung (55) gemeinsam mit Heizstrahlern (30) der Heizstrecke (24) positionierbar angeordnet ist.

## Claims

1. A method for the blow moulding of containers (2) wherein preforms (1) that are made of a thermoplastic material are heated in the area of a heating section (24) and subsequently transferred to a blowing device in which the preforms (1) are moulded by the action of a blowing pressure within blow moulds to form the containers (2), and wherein the preforms (1) are held by a carrying element (46) at least along a part of their transport path,
**characterised in that**
- the carrying elements (46) in the area of the heating section (24) are vertically adjusted relative to a base (66) of the heating section (24) together with a transport device (55) transporting the carrying elements (46) in a circumferential manner.

2. The method according to Claim 1, **characterised in that** the transport device (55) is vertically adjusted relative to a rack of the heating section (24).

3. The method according to Claim 1, **characterised in that** the transport device (55) is vertically adjusted relative to the base (66) together with a rack of the heating section (24).

4. The method according to Claim 3, **characterised in that** a level of the height at which the preforms (1) are introduced into the area of the heating section (24) is defined outside the heating section (24).

5. The method according to Claim 3 or 4, **characterised in that** a level at which the preforms (1) are put out of the heating section (24) is defined outside the heating section (24).

6. The method according to Claim 5, **characterised in that** an output level of the preforms (1) is defined by a transfer device at the blowing device.

7. The method according to any one of Claims 5 or 6, **characterised in that** the output level is defined by carrying elements arranged at a transfer wheel of the blowing device.

8. The method according to any one of Claims 1 to 7, **characterised in that** a vertical adjustment of the transport device (55) is made together with radiant heaters that are arranged in the area of the heating section (24).

9. An apparatus for the blow moulding of containers (2), the device comprising a heating section (24) for heating preforms (1) that are made of a thermoplastic material and being provided with a blowing device which comprises at least one blowing station (3) for moulding the preforms (1) to form the containers (2), **characterised in that** carrying elements (41) for transporting the preforms (1) in the area of the heating section (24) are held by a circumferentially driven transport device (55) and arranged such that they can be vertically adjusted relative to a base (66) of the heating section (24) together with the transport device (55).

10. The apparatus according to Claim 9, **characterised in that** the transport device (55) is arranged such that it can be vertically adjusted relative to a rack of the heating section (55).

11. The apparatus according to Claim 9, **characterised in that** the transport device (55) is arranged such that it can be vertically adjusted relative to the base (66) together with a rack of the heating section (24).

12. The apparatus according to Claim 11, **characterised in that** an input level of the preforms (1) into the heating section (24) separately from the heating section (24) is defined by a preform supply unit.

13. The apparatus according to Claim 11, **characterised in that** an output level of the preforms (1) out of the heating section (24) is defined by a component outside the heating section (24).

14. The apparatus according to Claim 13, **characterised in that** the output level of the preforms is defined by a component of the blowing device,

15. The apparatus according to any one of Claims 11 to 14, **characterised in that** the output level of the preforms is defined by carrying elements arranged at a transfer wheel of the blowing device.

16. The apparatus according to any one of Claims 9 to 15, **characterised in that** the transport device (55) is arranged such that it can be positioned together with radiant heaters (30) of the heating section (24).

## Revendications

1. Procédé de moulage par soufflage de récipients (2) dans le cadre duquel des préformes (1) en un matériau thermoplastique sont réchauffées dans une zone de chauffage (24) puis remises à un dispositif de soufflage dans lequel les préformes (1) sont transformées en récipients (2) à l'intérieur de moules de soufflage (4) sous l'effet d'une pression de soufflage, et dans le cadre duquel les préformes (1) sont maintenues par un élément porteur (46) le long d'une partie au moins de leur parcours, **caractérisé en ce que**, dans la zone de chauffage (24), les éléments porteurs (46) avec un dispositif de transport (55) assurant la circulation des éléments porteurs (46) sont ajustés en hauteur relativement à une surface d'appui (66) de la zone de chauffage (24).

2. Procédé selon la revendication 1, **caractérisé en ce que** dispositif de transport (55) est ajusté en hauteur relativement à un bâti de la zone de chauffage (24).

3. Procédé selon la revendication 1, **caractérisé en ce que** dispositif de transport (55) conjointement avec un bâti de la zone de chauffage (24) est ajusté en hauteur relativement à la surface d'appui (66).

4. Procédé selon la revendication 3, **caractérisé en ce qu'**un niveau de hauteur d'introduction des préformes (1) dans la zone de chauffage (24) est prédéfini en dehors de la zone de chauffage (24).

5. Procédé selon la revendication 3 ou 4, **caractérisé en ce qu'**un niveau de sortie des préformes (1) à la sortie de la zone de chauffage (24) est fixé en dehors de la zone de chauffage (24).

6. Procédé selon la revendication 5, **caractérisé en ce qu'**un niveau de sortie des préformes (1) est prédéfini par un dispositif de transfert au niveau du dispositif de soufflage.

7. Procédé selon l'une des revendications 5 ou 6, **caractérisé en ce que** le niveau de sortie est prédéfini par des éléments porteurs placés à une roue de transfert du dispositif de soufflage.

8. Procédé selon l'une des revendications 1 à 7, **caractérisé en ce que** le dispositif de transport (55) est ajusté en hauteur conjointement avec les radiateurs de chauffage (30) agencés dans la zone de chauffage (24).

9. Dispositif de moulage par soufflage de récipients (2), lequel présente une zone de chauffage (24) pour le réchauffement de préformes (1) en un matériau thermoplastique et est muni d'un dispositif de soufflage présentant au moins une station de soufflage (3) pour la transformation des préformes (1) en récipients (2), **caractérisé en ce que** des éléments porteurs (41) assurant le transport des préformes (1) dans la zone de chauffage (24) sont maintenus par un dispositif de transport (55) à entraînement périphérique et sont agencés de façon à pouvoir être, conjointement avec le dispositif de transport (55), ajustés en hauteur relativement à une surface d'appui (66) de la zone de chauffage (24).

10. Dispositif selon la revendication 9, **caractérisé en ce que** dispositif de transport (55) est agencé de façon à pouvoir être ajusté en hauteur relativement à un bâti de la zone de chauffage (55).

11. Dispositif selon la revendication 9, **caractérisé en ce que** le dispositif de transport (55) est agencé de façon à pouvoir être, conjointement avec un bâti de la zone de chauffage (24), ajusté en hauteur relativement à la surface d'appui (66).

12. Dispositif selon la revendication 11, **caractérisé en ce qu'**un niveau d'introduction des préformes (1) dans la zone de chauffage (24) est défini par un introducteur de préformes séparément de la zone de chauffage (24).

13. Dispositif selon la revendication 11, **caractérisé en ce qu'**un niveau de sortie des préformes (1) à la sortie de la zone de chauffage (24) est prédéfini par un composant extérieur à la zone de chauffage (24).

14. Dispositif selon la revendication 13, **caractérisé en ce que** le niveau de sortie des préformes est prédéfini par un composant du dispositif de soufflage.

15. Dispositif selon l'une des revendications 11 à 14, **caractérisé en ce que** le niveau de sortie des préformes est prédéfini par des éléments porteurs placés à une roue de transfert du dispositif de soufflage.

16. Dispositif selon l'une des revendications 9 à 15, **caractérisé en ce que** le dispositif de transport (55) est agencé de façon à pouvoir être positionné conjointement avec les radiateurs de chauffage (30) de la zone de chauffage (24).
